# EUROPÄISCHE PATENTSCHRIFT

(11) **EP 1 489 898 B1**
(45) Veröffentlichungstag und Bekanntmachung des Hinweises auf die Patenterteilung: **11.11.2009**
(21) Anmeldenummer: 03722251.0
(22) Anmeldetag: 02.04.2003
(51) Int. Cl.: A01G 9/14

(54) **ANLAGE ZUM ANBAU VON PFLANZEN**
DEVICE FOR THE CULTIVATION OF PLANTS
DISPOSITIF POUR LA PRODUCTION DES PLANTES

(30) Priorität: 03.04.2002 DE 10214760
(43) Veröffentlichungstag der Anmeldung: 29.12.2004
(73) Patentinhaber: Peiter, K., 56076 Koblenz (DE)
(72) Erfinder: Peiter, K., 56076 Koblenz (DE)
(86) Internationale Anmeldenummer: PCT/DE2003/001085
(87) Internationale Veröffentlichungsnummer: WO 2003/081986

(56) Entgegenhaltungen:
- EP-A- 1 123 649
- CH-A- 162 055
- DE-A- 3 325 913
- FR-A- 1 321 262
- US-A- 2 837 866

## Beschreibung

Die Erfindung befasst sich mit einer Anbautechnik zur optimalen ha- Ausnutzung landwirtschaftlicher Flächen, Unlandflächen und weiterer. Ziel gerichtet für moderne, ökonomisch /ökologisch orientierte Land-/Agrarwirtschaft, Gartenbau/ Weinbau und weiterer.

Gegenstand der Erfindung ist die moderne Anbautechnik.

Bisher ist es üblich, Freilandanbauflächen herkömmlich mit den traditionellen Anbautechniken Traktor etc. der Landwirtschaft/Gartenbau, zu bearbeiten. Auch kombiniert mit dem Anbau unter Glas oder Folie.

Beim herkömmlichen Verfahren ist ein bestimmter Ertrag je nach Pflanzensorte, Reihenabstand, Wachstumsbedingungen, Fruchtwechsel, Witterung etc. abhängig und bezogen auf den Umfang einer ha- Fläche. Der Ertrag wird mit Hilfe einer maschinen- und kostenintensiven Bewirtschaftung gewährleistet, die nicht selten der Marktnachfrage und dem zu erzielten Preis nur mit entsprechenden Zuschüssen und intensiver chemischer Düngung gerecht wird.

Ein gravierender Faktor ist die Boden- Fruchtwechsel -Klima- Wetter- und Gebietsabhängigkeit der Anbauprodukte der Land-/Agrarwirtschaft/Garten/Weinbau.

Zudem ist eine Ertragssteigerung, abgesehen vom begrenzt möglichen Frucht- oder Sortenwechsel, für einen Agrarbetrieb nur durch einen Zukauf/Pacht von weiteren ha-Flächen möglich, welcher nicht nur für Klein- u. Nebenerwerbslandwirte und in Gebieten mit wenig Ausdehnungsmöglichkeit schwierig ist.

Eine parallele Nutzung von Tier - und Pflanzenzucht ist auf der gleicher ha - Fläche nicht möglich.

Auch in Ländern der Dritten Welt ist die Ertragslage vieler Kleinbauem gering, da sie weder finanzielle Mittel noch Möglichkeit haben weitere Flächen zu erhalten und diese mit kostenintensiven Landmaschinen zu bearbeiten.

Ein weiteres Problem ist die konsequente Abholzung von Urwaldflächen, mit begrenzter landwirtschaftlicher Nutzungsmöglichkeit, mit der Folge der Versteppung.

Auch in unseren Breiten ist landwirtschaftlicher Ertrag vor allem vom Bodenwert abhängig, so dass Magerböden, Tagebau - oder Unlandflächen nur aufwendig in den Kreislauf landwirtschaftlicher Nutzung mit einbezogen werden können.

Gerade im Bereich der Nahrungsmittelerzeugungl nachwachsender Rohstoffe zur Energiegewinnung/chemische Grundstoffe und weiterer Produkte wäre eine Ausweitung auf sonst ungenutzte Flächen von größtem Vorteil.

Zudem führt die Klimaerwärmung, mit der Folge regenintensiver / stürmischer zum einen und extrem trockener Jahreszeiten zum anderen, zu Ernteschädigender Wirkung in der herkömmlichen Agrarwirtschaft, mit der Folgerung für eine witterungsunabhängige, wirtschaftlich tragfähige Anbautechnik.

Aus der FR 1 321 262 ist ein Gewächshaus bekannt, das auf einem treppenförmigen gestell Pflanzentröge aufweist. Der Raum unterhalb der Pflanzentröge kann dazu genutzt werden, Champignons zu züchten. Die Pflanzfläche der Tröge entspricht bei diesem Gewächshaus der Bodenfläche.

Die Aufgabe der Erfindung besteht darin, eine Anlage zum Anbau von Pflanzen bereitzustellen eine die optimale ökonomische und ökologische Ausnutzung einer ha- Fläche ermöglicht.

Die weitere Aufgabe ist auf der gleichen Fläche, klima- witterungs- bodenwert- und fruchtfolgeunabhängig, eine Kombination von Pflanzen- ( dies beinhaltet ca. 99 % aller angebauten Agrarprodukte) Tier- und/ oder variabel Fischzucht zu errichten, somit die wirtschaftliche Besonderheit der Mehrfach- und zu großen Teilen ganzjährige Nutzung einer Fläche.

Durch die in Anspruch 1 angegebene Lösung der Erfindung wird zudem erreicht, dass der Anbau unabhängig von kostenaufwendigen Maschinenpark der Agrarwirtschaft und den kosten - u. bearbeitungsintensiven herkömmlichen Anbaumethoden betrieben werden kann.

Ein weiterer wirtschaftlicher Vorzug der Erfindung besteht in der Nutzbarkeit von Unland - oder sonst für die Agrarwirtschaft bisher nicht verwendbaren Flächen.

Der weitere Kernpunkt der Erfindung als besonderer ökonomisch/ökologischer Vorteil ist, je nach Pflanzensorte durch entsprechenden Bodensubstrataustausch eine Fruchtfolge auf gleicher Fläche zu ermöglichen und auch bis zu vier, je nach Pflanzensorte fünf Ernten auf gleicher ha- Fläche per anno zu garantieren. Eine weitere Reduzierung des Flächenbedarfs wird erzielt durch Höhe und Winketstellung der Anlage.

Die Erfindung garantiert durch den wiederkehrenden Austausch des Bodensubstrats die Reduzierung der Unkrautbildung, auf eine unrelevante Größe.

Die Erfindung garantiert Mehrfachernten, auch aufgrund des integrierten Heizsystems und der speziellen Erntetechnik, mit geringstem Wasser- Energie- und Wärmeverbrauch pro Jahr.

Die Erfindung ermöglicht zudem durch die ökonomischlökologisch vorteilige Anlagenkombination, mit vor - und nachgebauten Gebäuden, Vorzucht, Ernte und Vermarktung direkt miteinander zu koppeln.

Die Erfindung sieht im Grundgedanken vor, mit einem technisch vorteiligem, ökonomischlökologischen Grundmodell ein flexibles Pflanz- und Tierzuchtsystem zubieten, dass sich den jeweiligen Bedingungen der Agrarwirtschaft und Marktnachfrage anpasst.

Der weitere wirtschaftliche Vorteil der Erfindung ist eine weltweite Anwendbarkeit.

Erfindungsgemäß wird die Aufgabe in bevorzugter Ausführung durch ein Anbauverfahren- und Vorrichtung gelöst, bei welchem zunächst die ha Flächen mit einer V-/Trapez- und stufenförmigen Anlage zur Bepflanzung bebaut werden.

Variabel ist auch die Ausführung ein stufenförmiges Hügelpyramidensystem machbar oder als eine in den Bodeneingebaute Version.

Zur Durchführung des erfindungsgemäßen Verfahrens werden mehrere, auch einzeln verwendbare V-/Trapez- und stufenförmige Anlagen, nebeneinander gebaut.

Zur Vermeidung von Bodenbelastung und Bodenversiegelung wird eine gebührende Abstandsfläche zwischen den einzelnen V-/Trapez- und stufenförmigen Anlagen, unter Berücksichtigung des Sonnenlicht- und Regeneinfalls gewährleistet.

In den Abstandflächen entsteht vorzugsweise genügend Raum für Tierzucht von Feder-/Kleintier- / Großtiereinheiten bis zu Fischzuchtanlagen und weiterer agrarspezifischer Anlagen, wobei eine Bedachung aus Glas, Folie oder weiterer Materialien in weiterer Ausgestaltung je nach Anforderung durchaus möglich ist.

Im Unterbaubereich der Anlage/Abstandsfläche können in weiterer bevorzugter Ausgestaltung der Erfindung wahlweise oder kombiniert mit Tierzuchtanlagen auch Bereiche für Kurztags - bzw. Dunkelpflanzungen, wie Pilzzüchtungen, Chicoree etc. errichtet werden.

Der Unterbaubereich ist alternativ auch als weitere Anbaufläche nutzbar, wobei für die Pflanzungen ein Schubladensystem oder weitere Pflanzvorrichtungen genutzt werden können und die Erststufe gegen Bodenbelastung/Bodenversiegelung frei bleiben kann.

Die V-/Trapez- und stufenförmige Anlage besteht in bevorzugter Ausführung aus einem Stecksystem, das aus Stählen, Alu, Edelstahle, Kunststoff, Betongussfertigteilen, Holzkonstruktionen oder ähnlichen Materialien errichtet werden kann, wobei variabel auch eine Festbetonierte oder mit weiteren Konstruktionsmöglichkeiten gestaltete Anlage möglich ist.

Die V-/Trapez- und stufenförmigen Anlage besteht weiter vorzugsweise aus einer aus Stahlbeton gegossenen oder weiterem Materialien hergestellten, durchgehenden Bodenmittelplatte, die variabel breit gestaltet werden kann und vorzugsweise mit einem aufliegenden Förderbandsystem über die gesamte Länge der Anlage ausgestattet ist.

Diese Bodenmittelplatte und somit das gesamte System kann als alternative Ausführung auch um eine noch geringere Bodenversiegelung zu erreichen, auf runden oder kantigen oder ähnlich geformten Säulen, die variabel hoch und gestaltet aus Stahl, Stahlbeton, Edelmetall, Holz Kunststoff und/oder weiterem Materialien, aufliegen.

Die Bodenmittelplatte dient als Fundament der Anlage und als Träger des V-/Trapez- und stufenförmigen Stecksystems.

Die Anlage wird zur weiteren Durchführung der erfindungsgemäßen Vorrichtung mit in Abständen wiederkehrenden seitlich angebrachten Stützträger, die aus Stahl, Stahlbeton, Edelmetall, Holz, Kunststoff und weiterem Materialien bestehen und in ihrer Form variabel sein können, abgestützt.

In weiterer Ausbildung der Vorrichtung und des Verfahrens werden vorzugsweise variable, je nach Pflanzensorte breite oder/und tiefe Pflanzwannen, die in quadratischen, rechteckigen, gebogenen und weitere Formen gestaltet sein können, auf eine bestimmte Länge bezogen eingestellt, eingehängt oder mit weiteren Befestigungsmöglichkeiten in die Pflanzstufenbahnen das Stecksystem eingesetzt, eingeschoben. Denkbar sind auch auf die gesamte Länge einer Anlage in das Stecksystem einmontierte Pflanzwannen. Die Pflanzstufenbahnen können im oberen Teil mit einer Schienenführung ausgestattet werden.

Die Pflanzwannen können aus Beton/Stein/ natursteinähnlichem Materialien/ Stähle /Edelstahle/ Glas/ glasähnliche Materialien/Kunststoffe/ Holz oder weiteren Materialien bestehen.

Die V-/Trapez- und stufenförmige Anlage kann in weiterer Ausführung je nach beabsichtigter Bepflanzung der Pflanzwannen und zur besseren Flächenausnutzung in flachem oder spitzerem Winkel und somit höher aufgestellt werden.

Die Pflanzstufenbahnenanzahl ist in weiterer bevorzugter Ausgestaltung nach oben hin variabel.

Das Be- und Entladen des Pflanzsubstrats, sowie die Bepflanzung und Ernte des Pflanzgut aus den Pflanzwannen, geschieht über ein Umlenkrollen geführtes Seilzugsystem, funkferngesteuert, elektrisch, mechanisch, pneumatisch, hydraulisch oder weiteren Antriebstechniken.

Das Pflanzsubstrat und Pflanzgut kann über das auf der Bodenmittelplatte aufgebrachte Bodenförderband zur Verarbeitung abtransportiert werden, und alternativ ist das Bodenförderband auch als vollwertige Pflanzfläche nutzbar. Nach Abernten dieser Förderbandfläche steht das Band frei für den Abtransport des Pflanzsubstrat und Pflanzguts der einzelnen Stufen.

Diese Variante kommt vorzugsweise für Pflanzen, z.B. nachwachsenden Rohstoffe in Frage, deren Weiterverarbeitung im Ganzen erfolgt, oder eine Frucht/Blattverletzung marginal ist.

Ein weiterer Pflanzbereich wird über eine modifizierte, Anlagenangepasste Landtechnik bepflanzt, bearbeitet und abgeerntet.

Stein-, Kern-, Beerenobst - und I oder das Abernten einzelner Pflanzen erfolgt über ein Umfenkgesteuertes Seilzugsystem, angepasster Technologie.

Das Heizsystem der Anlage besteht aus einem Warmwasserführenden Schlauchsystem, aus Gummi, PVC oder anderen Materialien, dass für die Innenerwärmung der Anlage über den Vorlauf, in/an die Bodenplatte befestigt und im Rücklauf zur Beheizung des Substrats lose auf dem Boden der Pflanzwannen liegt.

Je nach Außentemperatur fließt Computer- manuell oder mit weiteren Regulierungstechniken mehr oder weniger warmes Wasser.

Die Bewässerung der Pflanzen erfolgt über Tröpfchenbewässerung. Also durch einen auf dem Substrat lose neben der Pflanze liegenden perforierten Wasserschlauch, aus Gummi, PVC oder anderen Materialien mit integriertem Vor- und Rücklauf, oder ähnlichen Bewässerungssystemen. Über die Tropfbewässerung erfolgt auch die biologische Düngung, nach Standard und Vorschriften des biologischen Anbaus.

Jede einzelne V-/Trapez-stufenförmige Anlage wird mit einem Bedachung (Glas, Folie, Plexiglas oder weiterer Materialien) im oberen Bereich verschlossen, so dass ein witterungsunabhängiger Anbau erfolgt.

In regelmäßigen Abständen lässt sich das Dach über ein Raffverfahren, z.B. einer Folie oder weiterer Materialien, zwecks Entgegenwirkens von Wärmestau in den Sommermonaten über die eigene Seilwindenkonstruktion computergesteuert oder mechanisch oder mit weiteren Mechanismen öffnen oder schließen.

In weiterer Ausführung der Erfindung werden Produktionsgebäude quer zu einer oder beider Stirnseiten, je nach Länge der V-/Trapez- und stufenförmige Anlage/Pflanzstrassen verlaufend errichtet. Die Gebäude dienen zum Anziehen von Jungpflanzen, des Substrataustausch über Siloanlagen, der Verarbeiten der Pflanzen, sowie LogistiklVermarktung. Sowie bei Energiepflanzen zur Weiterverarbeitung in entsprechenden Verarbeitungs-Anlagen z.B. zur Ethanolgewinnung, chemische und weiterer Produkte aus nachwachsenden Rohstoffen.

Nachfolgend wird anhand der beigefügten Zeichnungen näher auf Ausführungsbeispiele der Erfindung eingegangen. Es zeigen schematisch:
Fig. 1
   erfindungsgemäße Anbautechnik Frontansicht
Fig. 2
   die erfindungsgemäße Anbautechnik Seiten-Ansicht
Fig. 3
   die erfindungsgemäße Anbautechnik Ansicht mit Produktionsgebäuden
Fig. 4
   die erfindungsgemäße Anbautechnik Unterbaubereich
Fig. 5
   die erfindungsgemäße Anbautechnik Frontansicht mit Säulen
Fig6
   die erfindungsgemäße Anbautechnik als Hügelpyramidensystem
Fig. 7
   die erfindungsgemäße Anbautechnik als in den Boden eingebaute Version

Die erfindungsgemäße Vorrichtung und das Verfahren bestehen aus der V-/ Trapez- u. stufenförmigen Gesamtanlage 1, bestehend aus dem V-/Trapez- u. stufenförmigen Stecksystem 2, einer Bodenmittelplatte 3 den in regelmäßigen Abständen angeordneten Stützträgern 4 zur Abstützung des Pflanzstufenbahnstecksystems 5 und der darin befindlichen eingehängten Pflanzwannen 6 in deren oben offenen Teil Substrat 7 und Pflanzgut 8 eingebracht wird.

Die Ausführung der Gesamtanlage ist auch als stufenförmiges Hügelpyramidensystem 32 möglich oder als in den Bodeneingelassene Version 33.

Jede einzelne V-/Trapez- stufenförmige Anlage hat eine Bedachung 9 die im oberen Bereich verschlossen ist, so dass ein witterungsunabhängiger Anbau möglich ist. In regelmäßigen Abständen lässt sich die Bedachung 9 über ein Raffverfahren oder Schiebeverfahren 10, z.B. einer Folie oder weiterer Materialien, zwecks Entgegenwirken von Wärmestau in den Sommermonaten über die eigene Seilzugkonstruktion 11 öffnen oder schließen.

Mehrere, auch einzeln verwendbare V-/Trapez- und stufenförmige Gesamtanlagen 1 können nebeneinander gebaut werden und es entsteht eine gebührende AbstandsFläche 12 zwischen den einzelnen V-/Trapez- und stufenförmigen Anlagen 1.

Im Bodenzwischenraum 13 der V-/Trapez- und stufenförmigen Anlage 1 befindet sich eine über die gesamte Länge durchgehende Bodenmittelplatte 3, die variabel breit gestaltet werden kann und mit einem aufliegenden Förderbandsystem 14 über die gesamte Länge der Anlage ausgestattet ist.

Die Bodenmittelplatte 3 dient als Fundament der Anlage und als Träger des W Trapez- und stufenförmigen Stecksystems 1 und im Mittelteil befindet sich ein Förderbandsystem 14, welches auch bepflanzbar ist.

Diese Bodenmittelplatte/ gesamte Anlage 1 / 3 kann alternativ auf runden oder kantigen Säulen 15, variabel hoch, aufliegen.

Die V-/Trapez- und stufenförmige Anlage 1 kann je nach beabsichtigter Bepflanzung der Pflanzwannen 6 und zur besseren Flächenausnutzung in flachem oder spitzerem Winkel und somit höher aufgestellt werden.

Die Pflanzstufenbahnenanzahl 5 nach oben hin variabel.

Die Pflanzwannen 6 werden in das Pflanzstufenbahnstecksystem 5 eingesetzt, eingestellt, eingehängt, eingeschoben, in Teilen oder variabel in gesamter Länge befestigt und können im oberen Teil mit einer Schienenführung 16 ausgestattet werden.

Die Pflanzwannen 6 des Pflanzstufenstecksystems 5 können in variablen Formen je nach Pflanzenart gestaltet und auch über zwei oder mehr Pflanzstufensteckbahnen 5, vertikal und horizontal erweitert werden.

Das Be- und Entladen des Pflanzsubstrats 7 , sowie die Bepflanzung und Ernte des Pflanzguts 8 aus den Pflanzwannen 6 , geschieht über das Umlenkrollen geführtes Seilzugsystem 17, mit entsprechenden Anbaugeräten.

Das Pflanzsubstrat 7 und Pflanzgut 8 kann über das auf der Bodenmittelplatte 3 aufgebrachte Bodenförderband 18 zur Verarbeitung abtransportiert werden, und alternativ ist das Bodenförderband auch als vollwertige Pflanzfläche nutzbar. Nach dem Abernten steht das Förderband 18 frei für den Abtransport des Pflanzsubstrat 7 und Pflanzguts 8 der einzelnen Stufen.

Ein weiterer Pflanzbereich wird über eine modifiziert, anlagenangepasste Landtechnik bepflanzt, bearbeitet und abgeerntet.

Stein-, Kern-, Beerenobst - und / oder das Abernten einzelner Pflanzteile erfolgt über eine an das Umlenkrollengesteuerte Seilzugsystem 17 angepasste Technologie. Das Heizsystem 19 besteht aus einem Warmwasserführenden Schlauchsystem 22, dass für die Innenerwärmung der Anlage über den Vorlauf 20, in/an die Bodenplatte 3 befestigt und im Rücklauf 21 zur Beheizung des Substrats über die gesamte Länge lose auf dem Boden der Pflanzwannen 5 liegt.

Das Schlauchsystem 22 kann über die vorhandene Seilwindenkonstruktion 17 angehoben werden.

Durch einen auf dem Substrat lose neben der Pflanze liegenden perforierten Wasserschlauch 23 erfolgt über die Tropfbewässerung und auch die biologische Düngung der Pflanzen.

Im Unterbaubereich 24 der V- u. stufenförmigen Stecksystems 2 besteht die Möglichkeit von Schubladensystemen 25 zur Anordnung von Stellagen und/oder Regalen zur Pflanzen oder -Tierzucht, und die Erststufe 26 zur Vermeidung von Bodenbelastung /Bodenversiegelung frei bleiben kann.

Der Durchgangs-/Fahrtabschnitts 27 unter Mitbenutzung des Unterbaubereichs 24 findet Verwendung als Tierzuchtanlage 28. Variabel /teilweise kann der Durchgangs-/Fahrtabschnitt 27 mit einer Bedachung 29 ausgestattet werden.

In weiterer Ausführung der Erfindung werden Produktionsgebäude 30 / 31 quer zu einer oder beider Stirnseiten der V-/Trapez- und stufenförmige Anlage/Pflanzstrassen 1 verlaufend errichtet.

Alle Einzelheiten der Ausführungsbeispiele sind auch untereinander austausch- oder kombinierbar je nach Erfordernis des einzelnen Anlagenbetreibers.

### Bezugszeichenliste

- (1): V.- und /Trapez- u. stufenförmigen Gesamtanlage
- (2): V.- und /Trapez- u. stufenförmigen Stecksystem
- (3): Bodenmittelplatte
- (4): Stützträger
- (5): Pflanzenstufenbahnstecksystem
- (6): Pflanzwannen
- (7): Substrat
- (8): Pflanzgut
- (9): Bedachung V-u./Trapez- stufenförmige Anlage
- (10): Raff- oder Schiebeverfahren
- (11): Seilzugkonstruktion
- (12): Abstandsfläche
- (13): Bodenzwischenraum
- (14): Förderbandsystem
- (15): Säulen
- (16): Schienenführung
- (17): Umlenkrollen geführtes Seilzugsystem
- (18): Bodenförderband
- (19): Heizsystem
- (20): Vorlauf
- (21): Rücklauf
- (22): Warmwasserführendes Schlauchsystem
- (23): perforierter Wasserschlauch
- (24): Unterbaubereich
- (25): Schubladensystem
- (26): Erststufe
- (27): Durchgangs-/Fahrtabschnitts
- (28): Tierzuchtanlage
- (29): Bedachung
- (30): Produktionsgebäude I
- (31): Produktionsgebäude II
- (32): hügelförmiges Pyramidensystem
- (33): Bodeneingelassene Version

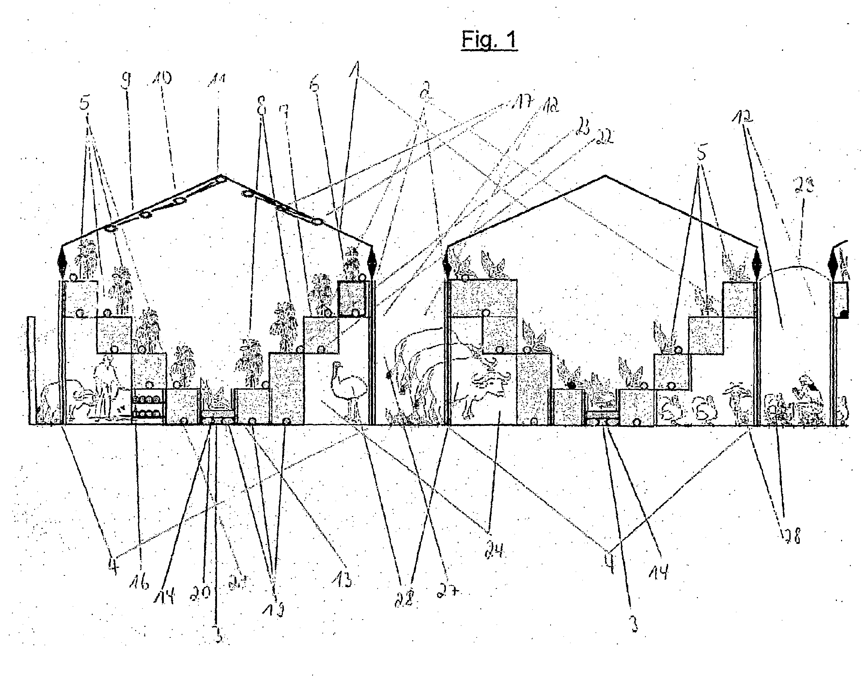

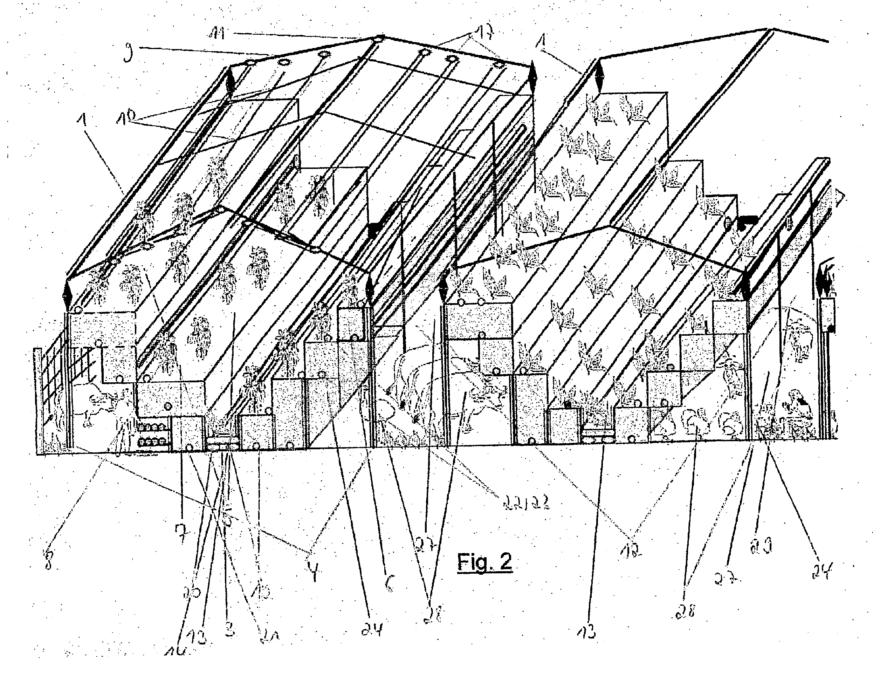

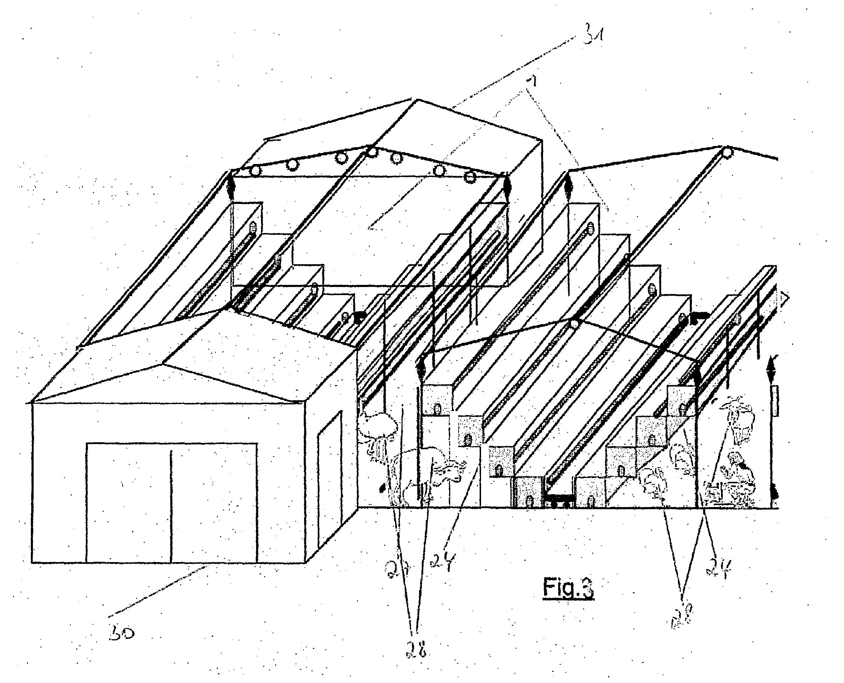

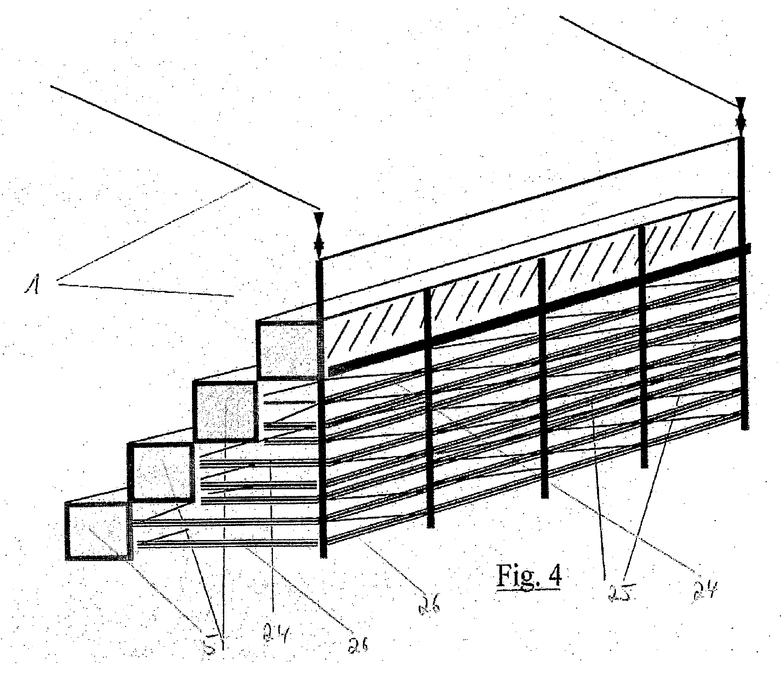

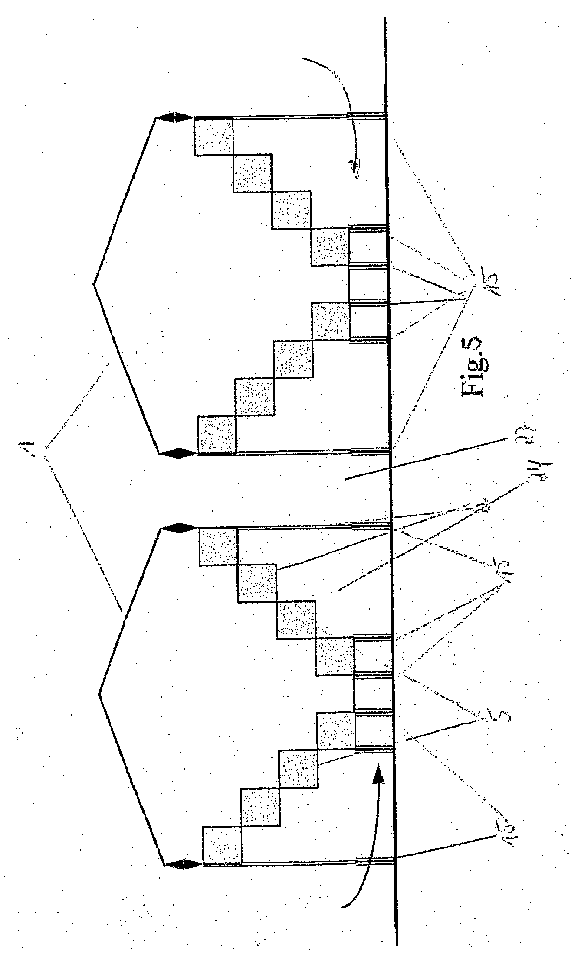

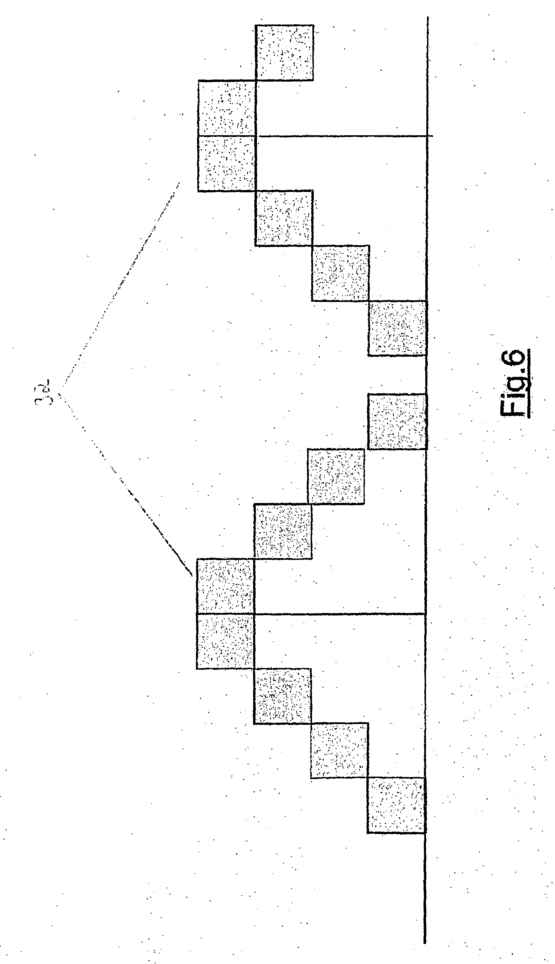

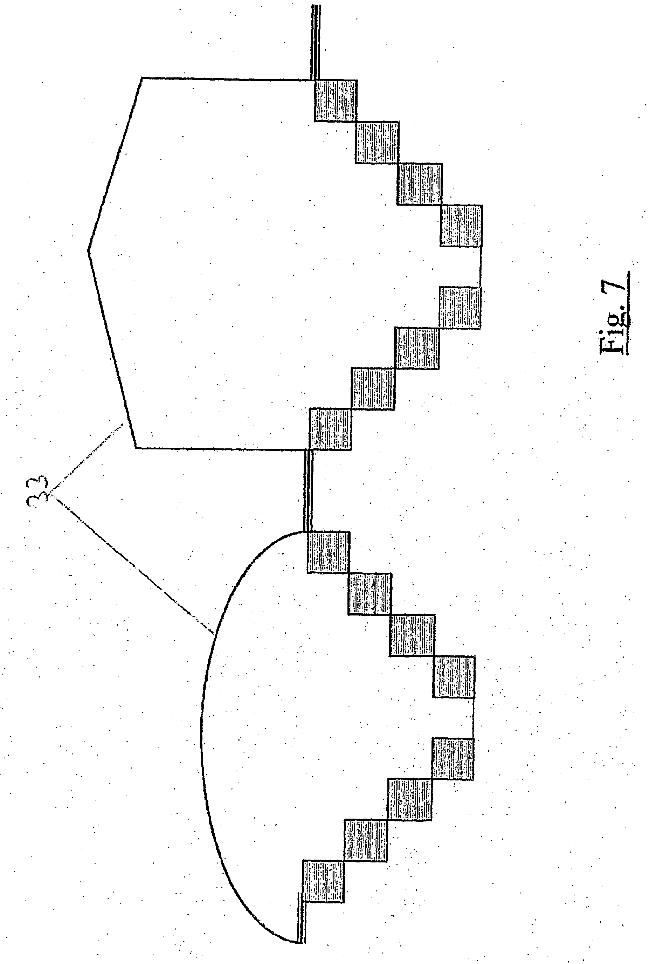

## Patentansprüche

1. Stufenförmige Anlage zum Anbau von Pflanzen als Gewächshaussystem, bestehend aus stufenförmigen Stecksystemen (2) mit eingebauten Pnanzenstufenbahnen (5), in denen sich Pflanzwannen (6) zur Aufnahme von Pflanzsubstrat (7) und Pflanzgut (8) befinden, **dadurch gekennzeichnet, dass** die stufenförmigen Stecksysteme (2) mit den Pflanzenstufenbahnen (5) V- oder Trapezförmig angeordnet sind, wobei zwischen jeweils zwei V- oder Trapezförmig angeordneten Stecksystemen (2) eine Bodenmittelplatte (3) im Bodenzwischenraum als Fundament und Träger angeordnet ist und dass die Anlage mit einer Bedachung (9) versehen ist.

2. Anlage zum Anbau von Pflanzen nach Anspruch 1, **dadurch gekennzeichnet, dass** das Stecksystem (2) aus Stahl, Edelstahl, Aluminium, Kunststoff, Holz oder Betongussfertigteilen besteht oder als Gesamtsystem fertig betoniert ist.

3. Anlage zum Anbau von Pflanzen nach Anspruch 1 oder Anspruch 2, **dadurch gekennzeichnet, dass** sie als stufenförmiges Hügelpyramidensystem (32) oder als in den Boden eingelassenes System (33) oder als ein auf runden oder kantigen Stützträgern (4) und/oder Säulen (15) je nach statischer Erfordernis aufliegend errichtetes System ausgeführt ist.

4. Anlage zum Anbau von Pflanzen nach einem der Ansprüche 1 bis 3, **dadurch gekennzeichnet, dass** die Bedachung (9) im oberen Bereich jeder einzelnen aus einem V- oder Trapezförmigen Stufenstecksystem (2) gebildeten Anlage vorgesehen ist und aus Glas oder Folie und/ oder Plexiglas besteht, und dass
die Bedachung (9) in regelmäßigen Abständen über eine Raff- oder Schiebevorrichtung mittels einer Seilzugkonstruktion (11) geöffnet oder geschlossen werden kann.

5. Anlage zum Anbau von Pflanzen nach einem der Ansprüche 1 bis 4, **dadurch gekennzeichnet, dass** mehrere aus einem V- oder Trapezförmigen stufenförmigen Stecksystem (2) gebildete Anlagen nebeneinander mit einer Abstandsfläche (12) errichtet sind.

6. Anlage zum Anbau von Pflanzen nach einem der Ansprüche 1 bis 5, **dadurch gekennzeichnet, dass** sich die Bodenmittelplatte (3) über die gesamte Länge der jeweiligen Anlage erstreckt, ihre Breite variabel ist und im mittleren Teil ein Förderbandsystem angeordnet ist, das Pflanzgut und/ oder PHanzsubstrat zur Verarbeitung transportiert oder das variabel bepflanzbar ist.

7. Anlage zum Anbau von Pflanzen nach einem der Ansprüche 1 bis 6, **dadurch gekennzeichnet, dass** das V- oder Trapezförmige stufenförmige Stecksystem (2) und die Pflanzwannen (6) zur besseren Flächenausnutzung in flachem oder spitzen Winkel und somit höher aufgestellt werden.

8. Anlage zum Anbau von Pflanzen nach einem der Ansprüche 1 bis 7, **dadurch gekennzeichnet, dass** die Pflanzwannen (6) unterschiedliche Formen und Materialien aufweisen und in die Pflanzenstufenbahnen (5) variabel eingesetzt, eingestellt, eingehängt oder eingeschoben werden, und in Teilen oder in der gesamten Länge der Anlage in den Pflanzenstufenbahnen (5) beweglich angeordnet werden, wobei die Pflanzenstufenbahnen (5) im oberen Teil mit einer Schienenführung ausgestattet sind.

9. Anlage zum Anbau von Pflanzen nach einem der Ansprüche 1 bis 8, **dadurch gekennzeichnet, dass** das Be- und Entladen des Pflanzsubstrats sowie die Bepflanzung und Ernte des Pflanzguts, insbesondere von Stein-, Kern- und Beerenobst, mittels eines über Umlenkrollen geführtes Seilzugsystem (17) erfolgt.

10. Anlage zum Anbau von Pflanzen nach einem der Ansprüche 1 bis 9, **dadurch gekennzeichnet, dass** die Beheizung der Anlage aus einem Warmwasser führenden Schlauchsystem (22) besteht, das für die Erwärmung des Innenraumes der Anlage über den Vorlauf (20) in oder an der Bodenmittelplatte (3) befestigt ist und für die Beheizung des . Pflanzsubstrats über den Rücklauf (21) über die gesamte Länge lose auf dem Boden der Pflanzwannen (6) liegt.

11. Anlage zum Anbau von Pflanzen nach Anspruch 10, **dadurch gekennzeichnet, dass** zum Anheben des Schlauchsystems (22) des vorhandene Seilzugsystem (17) verwendet wird.

12. Anlage zum Anbau von Pflanzen nach einem der Ansprüche 1 bis 11, **dadurch gekennzeichnet, dass** die Bewässerung über einen perforierten Wasserschlauch (23) zur Tropfbewässerung und biologische Düngung erfolgt, der lose neben den Pflanzen liegt und sich über die gesamte Länge der Pflanzwannen (6) erstreckt.

13. Anlage zum Anbau von Pflanzen nach einem der Ansprüche 1 bis 12, **dadurch gekennzeichnet, dass** das Gewächshaussystem unterhalb des stufenförmigen Stecksystems einen Unterbaubereich (24) aufweist, der als eine weitere Agramutzanlage wie eine Tierzuchtanlage (28) dient oder für die Anordnung von Schubladensystemen (25), Stellagen, Regalen zur weiteren Anzucht von Pflanzen und Tieren genutzt wird.

14. Anlage zum Anbau von Pflanzen nach einem der Ansprüche 5 bis 13, **dadurch gekennzeichnet, dass** die Abstandsfläche zwischen zwei Anlagen als Durchgangs- oder Durchfahrtsabschnitt (27) dient.

15. Anlage zum Anbau von Pflanzen nach Anspruch 14, **dadurch gekennzeichnet, dass** der Durchgangs- oder Durchfahrtsabschnitt (27) zumindest teilweise mit einer Bedachung versehen ist.

16. Anlage zum Anbau von Pflanzen nach Anspruch 14 oder 15, **dadurch gekennzeichnet, dass** zusätzlich zu der Abstandsfläche zwischen zwei Anlagen auch der Unterbaubereich mitnutzbar ist.

17. Anlage zum Anbau von Pflanzen nach einem der Ansprüche 14 bis 16, **dadurch gekennzeichnet, dass** die Fläche als weitere Agramutzanlage dient.

18. Anlage zum Anbau von Pflanzen nach einem der Ansprüche 1 bis 17, **dadurch gekennzeichnet, dass** quer zu einer oder beiden Stirnseiten des Gewächshaussystems oder der Anlage Produktionsgebäude angeordnet sind, in denen das Anziehen von Jungpflanzen, die PNanzenverarbeitung, die industrielle Verarbeitung, die Logistik und die Vermarktung erfolgt.

## Claims

1. A tiered construction for the cultivation of plants serving as a greenhouse system and consisting of tiered plug-in systems (2) with built-in tiered plant racks (5) where plant containers (6) are positioned to be used as receptacles for plant substrate (7) and plant stock (8), **characterised in that** there is a V-shaped or trapezoidal arrangement of the tiered plug-in systems (2) and the tiered plant racks (5) with a central floor board (3) serving as a foundation and support, which is placed in the floor spacing between two respective plug-in systems (2) arranged in a V- or trapezoidal shape and that it features a roof covering (9).

2. A construction for the cultivation of plants according to claim 1, **characterised in that** a plug-in system (2) is made of steel, stainless steel, aluminium, plastic, wood or prefabricated concrete slabs or that the entire system is finished in cast concrete.

3. A construction for the cultivation of plants according to claim 1 or claim 2, **characterised in that** it is a design consisting of a tiered sloping pyramid system (32) or a system that has been sunk into the ground (33) or a system that, depending on the structural requirements, rests on round or square-edged support girders (4) and/or columns (15).

4. A construction for the cultivation of plants according to one of the claims 1 to 3, **characterised in that** a roof covering (9) is installed in the upper section of each single construction comprising one V- or trapezoidal-shaped tiered plug-in system (2), which is made from glass or sheeting and/or Perspex and which can be opened or closed at regular intervals via a folding or sliding mechanism operated by a cable pull (11).

5. A construction for the cultivation of plants according to one of claims 1 to 4, **characterised in that** several constructions consisting of one V- or trapezoid-shaped plug-in system (2) are erected side-by-side with a distance space (12) between them.

6. A construction for the cultivation of plants according to one of claims 1 to 5, **characterised in that** the central floor board (3) covers the entire length of the respective construction, its width is variable and a conveyor belt system is located in the centre, which transports plant stock and/or plant substrate for processing or which can be planted up in various ways.

7. A construction for the cultivation of plants according to one of claims 1 to 6, **characterised in that** the V- or trapezoid-shaped tiered plug-in system (2) and the plant containers (6) are positioned at flat or acute angles and therefore at a higher level, which ensures an improved use of space.

8. A construction for the cultivation of plants according to one of claims 1 to 7, **characterised in that** the plant containers (6) have various shapes and materials and are inserted, placed, hooked or slid into the tiered plant racks (5) in variable ways and can be freely moved about within the tiered plant racks (5) in parts or along the full length of the construction whereby the tiered plant racks (5) in the upper section are equipped with an aligning rail.

9. A construction for the cultivation of plants according to one of claims 1 to 8, **characterised in that** the loading and unloading of the plant substrate as well as the planting and harvesting of the plant stock, in particular stone fruit, pip fruit and soft fruit, is carried out via a cable pull system (17) operated via a deflection pulley.

10. A construction for the cultivation of plants according to one of claims 1 to 9, **characterised in that** the heating of the construction consists of a warm-water-carrying hose pipe system (22) whose supply line (20) is fastened in or on the central floor board (3) in order to heat the interior of the construction and whose return line (21) is loosely placed at the bottom of the plant containers (6) along their full length to heat the plant substrate.

11. A construction for the cultivation of plants according to claim 10, **characterised in that** the existing cable pull system (17) is used to lift the hose pipe system (22).

12. A construction for the cultivation of plants according to one of claims 1 to 11, **characterised in that** the irrigation is carried out via a perforated water hose (23) providing drip irrigation and biological fertilisation, which is loosely positioned next to the plants along the full length of the plant containers (6).

13. A construction for the cultivation of plants according to one of claims 1 to 12, **characterised in that** the greenhouse system features a bottom section (24) underneath the tiered plug-in system, which serves as an additional space for agricultural use such as livestock breeding (28) or which may be used for the installation of drawer systems (25), stillages or shelving to be used for cultivating more plants or for livestock breeding.

14. A construction for the cultivation of plants according to one of claims 5 to 13, **characterised in that** the space between two constructions serves as a passage to walk or drive through (27).

15. A construction for the cultivation of plants according to claim 14, **characterised in that** the walk- or drive-through passage (27) is, at least in parts, sheltered by a roof covering.

16. A construction for the cultivation of plants according to claims 14 or 15, **characterised in that**, apart from the space between two constructions, the bottom section is an additional usable space.

17. A construction for the cultivation of plants according to one of claims 14 to 16, **characterised in that** the area is available for additional agricultural use.

18. A construction for the cultivation of plants according to one of claims 1 to 17, **characterised in that** production buildings are positioned at right angles to one or both narrow sides of the greenhouse system or the construction, where the growing of seedlings, the processing of plants, the industrial processing as well as the logistics and marketing activities are carried out.

## Revendications

1. Installation en gradins destinée à la culture de plantes en tant que système de culture sous serre, constituée de systèmes enfichables en gradins (2) dotés de bandes de culture étagée (5) dans lesquelles se trouvent les bacs de culture (6) destinés à recevoir le substrat (7) et les plants (8), **caractérisée en ce que** les systèmes enfichables en gradins (2) et les bandes de culture étagée (5) sont disposés en V ou en forme de trapèze, sachant qu'une plaque de base médiane (3) est disposée respectivement entre deux systèmes enfichables en gradins (2) en forme de V ou de trapèze pour servir de fond et de support, et **en ce que** ladite installation est dotée d'une couverture (9).

2. Installation de culture de plantes selon la revendication 1, **caractérisée en ce que** le système enfichable en gradins (2) est constitué d'éléments préfabriqués en acier, acier spécial, aluminium, plastique, bois ou béton coulé ou se présente sous forme de système intégral fini en béton.

3. Installation de culture de plantes selon les revendications 1 ou 2, **caractérisée en ce qu'**elle est réalisée sous forme d'un système pyramidal en gradins (32) ou sous forme de système encastré dans le sol (32) ou sous forme de système érigé sur des supports de section ronde ou angulaire (4) et/ou des piliers (15), selon les exigences requises par la statique.

4. Installation de culture de plantes selon les revendications 1 à 3, **caractérisée en ce que** la couverture (9) est prévue dans la partie supérieure de chacune des installations constituées par un système enfichable en gradins (2) en forme de V ou en forme de trapèze, et faite de verre ou de film plastique et/ou de plexiglas, et que ladite couverture (9) pourra être ouverte ou fermée régulièrement au moyen d'un dispositif drapé ou coulissant à l'aide d'une construction à tirant à câble (11).

5. Installation de culture de plantes selon les revendications 1 à 4, **caractérisée en ce que** plusieurs installations constituées par un système enfichable en gradins (2) en forme de V ou en forme de trapèze peuvent être érigées l'une à côté de l'autre avec une marge latérale (12).

6. Installation de culture de plantes selon les revendications 1 à 5, **caractérisée en ce que** la plaque de base médiane (3) s'étire sur toute la longueur de l'installation respective, que sa largeur est variable et qu'elle comporte en son centre un système de bande convoyeuse transportant des plants ou du substrat destinés à être utilisés ou qui peut être planté de manière variable.

7. Installation de culture de plantes selon les revendications 1 à 6, **caractérisée en ce que** le système enfichable en gradins (2) en forme de V ou en forme de trapèze et les bacs de culture (6) peuvent être disposés à un angle plat ou aigu, c'est-à-dire plus en hauteur.

8. Installation de culture de plantes selon les revendications 1 à 7, **caractérisée en ce que** les bacs de culture (6) se présentent sous différentes formes et matériaux et peuvent être posés, accrochés ou insérés de manière variable dans les bandes de culture étagée (5), et que lesdits bacs de culture peuvent être disposés de manière mobile dans les bandes de culture étagée (5) sur des parties ou sur toute la longueur de l'installation, sachant que les bandes de culture étagée (5) disposées dans la partie supérieure sont dotées de rails.

9. Installation de culture de plantes selon les revendications 1 à 8, **caractérisée en ce que** le chargement et le déchargement du substrat ainsi que la plantation et la récolte des plants, en particulier de fruits à noyaux, à pépins et de baies, sont effectués au moyen d'un système de tirant à câble (17) passant par des poulies de déviation.

10. Installation de culture de plantes selon les revendications 1 à 9, **caractérisée en ce que** le chauffage de l'installation est assuré par un système de tuyaux (22) d'eau chaude qui, pour chauffer l'espace intérieur de ladite installation à l'aller (20), est fixé dans ou à la plaque de base médiane (3) et qui, pour chauffer le substrat par le retour d'eau (21), est posé de manière lâche au fond des bacs de culture (6) sur toute leur longueur.

11. Installation de culture de plantes selon la revendications 10, **caractérisée en ce que** le système de tirant à câble (17) en place est utilisé pour soulever le système de tuyaux (22).

12. Installation de culture de plantes selon l'une des revendications 1 à 11, **caractérisée en ce que** l'irrigation sera effectuée par un tuyau d'eau perforé (23) pour micro-irrigation et biofertilisation, sachant que ledit tuyau est posé de manière lâche près des plantes et sur toute la longueur des bacs de culture (6).

13. Installation de culture de plantes selon les revendications 1 à 12, **caractérisée en ce que** le système de serre est doté sous le système enfichable en gradins (2) d'une substructure (24) servant d'installation agraire supplémentaire, telle qu'une installation d'élevage (28), ou servant à installer des systèmes à tiroirs (25), tréteaux, rayonnages à vocation de pépinière ou destinés à l'élevage.

14. Installation de culture de plantes selon les revendications 5 à 13, **caractérisée en ce que** l'espacement entre deux installations sert de passage pour des hommes ou des véhicules (27).

15. Installation de culture de plantes selon la revendication 14, **caractérisée en ce que** le passage pour les hommes ou les véhicules (27) est doté du moins partiellement d'une couverture.

16. Installation de culture de plantes selon les revendications 14 ou 15, **caractérisée en ce qu'**en sus de l'espacement entre deux installations, l'espace en substructure peut également être exploité.

17. Installation de culture de plantes selon l'une des revendications 14 à 16, **caractérisée en ce que** la surface sert de surface agraire supplémentaire.

18. Installation de culture de plantes selon les revendications 1 à 17, **caractérisée en ce que** des bâtiments d'exploitation sont édifiés transversalement à l'un des fronts ou aux deux fronts du système de serre ou de l'installation, lesdits bâtiments étant conçus soit comme pépinière de jeunes plants, soit pour la transformation de plantes, la transformation industrielle, la logistique et/ou la commercialisation.
